(19) Europäisches Patentamt
European Patent Office
Office européen des brevets

(11) Numéro de publication: **0 382 627 A1**

(12) **DEMANDE DE BREVET EUROPEEN**

(21) Numéro de dépôt: **90400322.5**

(51) Int. Cl.⁵: **C08J 3/00, C08F 291/00**

(22) Date de dépôt: **06.02.90**

(30) Priorité: **09.02.89 FR 8901677**

(43) Date de publication de la demande: **16.08.90 Bulletin 90/33**

(84) Etats contractants désignés: **DE ES GB IT NL SE**

(71) Demandeur: **THOMSON-CSF**
**51, Esplanade du Général de Gaulle**
**F-92800 Puteaux(FR)**

(72) Inventeur: **Guyomar, Daniel**
**Thomson-CSF, SCPI-Cédex 67**
**F-92045 Paris La Défense(FR)**
Inventeur: **Tocquet, Bernard**
**Thomson-CSF, SCPI-Cédex 67**
**F-92045 Paris La Défense(FR)**
Inventeur: **Candau, Sauveur**
**Thomson-CSF, SCPI-Cédex 67**
**F-92045 Paris La Défense(FR)**
Inventeur: **Lemarechal, Pierre**
**Thomson-CSF, SCPI-Cédex 67**
**F-92045 Paris La Défense(FR)**
Inventeur: **Schroder André**
**Thomson-CSF, SCPI-Cédex 67**
**F-92045 Paris La Défense(FR)**

(74) Mandataire: **Turlèque, Clotilde et al**
**THOMSON-CSF SCPI**
**F-92045 PARIS LA DEFENSE CEDEX 67(FR)**

(54) **Procédé de fabrication d'un matériau atténuateur d'ondes acoustiques, et son application à la réalisation d'écrans acoustiques à immerger.**

(57) Le procédé de fabrication d'un matériau atténuateur d'ondes acoustiques comprend les phases suivantes :
- préparation d'une solution aqueuse d'un monomère et d'un comonomère servant d'agent de réticulation, à laquelle est éventuellement ajouté un produit amorceur de la réaction ;
- dispersion dans la solution d'une poudre formée de grains poreux de polymères réticulés se gonflant en présence d'eau ;
- réticulation du mélange.

Application, notamment, à la réalisation d'écrans acoustiques en immersion dans l'eau.

FIG_4

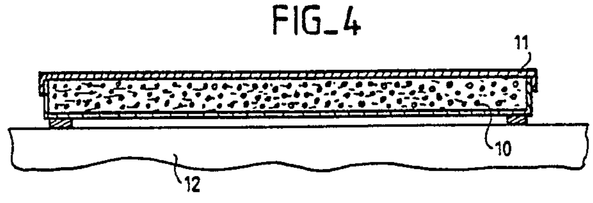


EP 0 382 627 A1

Xerox Copy Centre

# Procédé de fabrication d'un matériau atténuateur d'ondes acoustiques, et son application à la réalisation d'écrans acoustiques à immerger

L'invention se rapporte au domaine de l'acoustique, et plus particulièrement à un procédé de fabrication d'un matériau atténuateur d'ondes acoustiques dans l'eau, et à son application à la réalisation d'écrans acoustiques.

Il est connu qu'un rideau de bulles d'air dans l'eau, ou une émulsion dans un liquide de bulles microscopiques, de l'ordre du micromètre, réalise un écran acoustique. De nombreuses études sur l'atténuation du son dans les émulsions ont été faites. On peut se référer notamment à un article de J.R. ALLEGRA et S. A. HOWLEY publié dans le JASA volume 51, 1972, pages 1545 à 1564.

L'atténuation est obtenue par effet thermoélastique : l'onde acoustique de compression entraîne au niveau de chaque inclusion une dissipation thermique. L'atténuation introduite est fonction du produit $fR^2$, f étant la fréquence de l'onde acoustique, et R le rayon de l'inclusion sphérique. Pour une fréquence donnée, l'atténuation est maximum pour un rayon R donné.

Lorsque l'on considère une émulsion ou suspension de bulles d'air dans de l'eau, et que l'on calcule l'atténuation à partir de la théorie formulée dans l'article ci-dessus, on obtient des coefficients d'atténuation qui augmentent avec la fréquence dans une certaine gamme.

Par ailleurs, dans un domaine complètement différent, on sait produire des gels aqueux suffisamment "solides" pour former un matériau de construction. Ces gels ont des caractéristiques acoustiques proches de celles de l'eau quand ils sont homogènes.

L'invention a pour objet un procédé de fabrication d'un matériau atténuateur d'ondes acoustiques, utilisant le principe de l'atténuation du son par des émulsions, mais susceptible d'être obtenu sous forme de gels de constance suffisante, de manière à réaliser des écrans acoustiques.

Selon l'invention, un procédé de fabrication d'un matériau atténuateur d'ondes acoustiques, est caractérisé en ce qu'il comporte les phases suivantes :

- préparation d'une solution aqueuse d'un monomère et d'un comonomère servant d'agent de réticulation propre à la formation d'un gel aqueux par réticulation ;
- dispersion dans la solution d'une poudre formée de grains poreux de polymères réticulés se gonflant en présence d'eau ;
- réticulation du mélange ainsi obtenu jusqu'à obtention d'un gel aqueux formable comportant des inclusions d'air formées à partir des grains.

L'invention a également pour objet l'application de ce procédé à la réalisation d'écrans acoustiques.

L'invention sera mieux comprise et d'autres caractéristiques apparaîtront à l'aide de la description qui suit en référence aux figures annexées.

- La figure 1 illustre les caractéristiques d'atténuation de deux solutions de bulles d'air dans l'eau, pour des bulles d'air ayant des rayons différents ;
- La figure 2 représente le coefficient de transmission en fonction de la fréquence présenté par un écran formé du matériau obtenu par le procédé selon l'invention ;
- La figure 3 représente le coefficient de réflexion d'un écran formé d'un matériau obtenu par le procédé selon l'invention ;
- La figure 4 représente un mode de réalisation en coupe d'un écran acoustique selon l'invention.

La figure 1 illustre des caractéristiques connues d'une suspension de bulles d'air dans de l'eau : la courbe 1 illustre le cas où le rayon des bulles d'air est égal à 600 micromètres, et la courbe 2 illustre le cas où les bulles d'air ont un rayon de 200 micromètres, la solution de bulles d'air étant à 1% dans l'eau. Le coefficient d'atténuation en dB par cm est plus grand à 100 hertz lorsque le rayon des inclusions est 600 microns, mais plus grand à 1000 hertz lorsque le rayon des inclusions est de 100 microns. Ainsi, comme indiqué ci-dessus la valeur du coefficient d'atténuation est maximisée par le choix d'un rayon R pour les bulles d'air en solution.

Selon l'invention, le procédé de fabrication du matériau atténuateur d'ondes acoustiques, constitué de trois étapes principales, est décrit ci-après :

A) dans une première phase, une solution aqueuse d'un monomère et d'un comonomère servant d'agent de réticulation est préparée. Dans un exemple préférentiel un amorceur est également prévu dans cette solution aqueuse de départ. Le monomère est avantageusement de l'acide acrylique à une concentration dans la solution comprise entre 15 et 30%. Le comonomère est avantageusement du N-N′ méthylbisacrylamide, à une concentration pouvant varier de 0,1 à 1%. L'amorçeur est du persulfate de potassium ou d'ammonium à une concentration pouvant varier entre 0 et 0,1%.

B) dans une seconde phase, une poudre formée de grains poreux de polymères réticulés se gonflant en présence d'eau est dispersée dans cette solution. Cette poudre est obtenue soit par polymérisation en suspension inverse, soit par polymérisation en solution. La poudre peut être de l'acide polyacrylique partiellement neutralisé, ou de la carboxycellulose, ou encore du polystyrène sulfoné. Ces poudres sont préparées industriellement et peuvent être trouvées dans le commerce, commercialisées par la société NORSOLOR sous les noms commerciaux "Norsocryl" ou "Aqua-keep". La concentration de cette poudre dans la solution doit être comprise entre 2% et 4%.

C) la troisième phase est une phase de réticulation pendant une durée qui dépend de la température, soit 2 à 3 heures à 70° C, ou plusieurs jours à la température ambiante.

Le matériau résultant a les caractéristiques suivantes : c'est un gel et il contient des inclusions d'air dont le diamètre est de l'ordre de quelques centaines de micromètres, avec une densité de quelques pourcents. Ce matériau peut être mis sous forme de plaques par exemple, et dans un mode de réalisation de l'invention des panneaux de dimension $1m^2$ et d'épaisseur 5cm ont pu être obtenus. Les caractéristiques d'un tel panneau, coefficient de transmission des ondes acoustiques et coefficient de réflexion des ondes acoustiques en fonction de la fréquence, sont représentées sur les figures 2 et 3.

Ces figures montrent que le coefficient de transmission est remarquablement faible, inférieur ou de l'ordre de -30 dB aux fréquences comprises entre 3 et 7 KHz, ce coefficient de transmission étant encore inférieur à -20 dB à 10 KHz.

Quand au coefficient de réflexion, il décroît de -3 dB à 3 KHz jusqu'à -7 dB à 10 KHz. Ces valeurs indiquent que le matériau se comporte en partie comme un réflecteur acoustique mou, c'est-à-dire d'impédance acoustique plus faible que celle de l'eau.

Avec un tel matériau il est possible de fabriquer à un coût faible des écrans ou barrières acoustiques en basse fréquence.

Ces écrans ou barrières peuvent être obtenus suivant plusieurs géométries en utilisant la technique de moulage. Les 3 étapes du procédé sont réalisés dans un moule par coulage des produits. On peut ainsi obtenir des plaques, des cylindres etc...

Pour cela comme représenté en coupe sur la figure 4 le matériau décrit ci-dessus, mis sous forme de plaque 10, est enfermé dans un boîtier rigide 11 de faible épaisseur, quelques millimètres, en PVC ou en fibre de verre imprégnée de résine de polyester, de façon à permettre sa fixation sur une structure 12. Le matériau peut également être moulé dans un matériau élastomère souple ou bien dans un polyuréthanne transparent aux ondes acoustiques. Pour former un écran acoustique, la plaque de ce matériau selon l'invention peut également être placée dans un boîtier rigide sur une face et souple sur l'autre tel que celui décrit dans la demande de brevet n° 83 00753 au nom de la Demanderesse.

Dans un mode préféré de réalisation, le matériau atténuateur d'ondes acoustiques selon l'invention est constitué de la manière suivante :

La solution de départ contient les proportions suivantes des différents constituants :

- 80 grammes d'eau
- 20 grammes d'acide acrylique (monomère)
- 0,2 gramme de N-N′ méthylbisacrylamide, (comonomère)
- 0,66 gramme de persulfate d'ammonium ou de potassium (amorceur),
- 3 grammes de poudre "Norsocryl" sont ensuite dispersés dans la solution,.

La réticulation est alors effectuée à 70° C pendant deux heures.

L'invention n'est pas limitée au mode préféré de réalisation décrit ci-dessus, et tout mélange ayant les caractéristiques définies ci-dessus et permettant d'obtenir les propriétés décrites, gel aqueux contenant des inclusions d'air de diamètre convenable pour réaliser un écran acoustique, sont du domaine de l'invention.

## Revendications

1. Procédé de fabrication d'un matériau atténuateur d'ondes acoustiques, caractérisé en ce qu'il comporte les phases suivantes :
- préparation d'une solution aqueuse d'un monomère et d'un comonomère servant d'agent de réticulation propre à la formation d'un gel aqueux par réticulation ;
- dispersion dans la solution d'une poudre formée de grains poreux de polymères réticulés se gonflant en présence d'eau ;
- réticulation du mélange ainsi obtenu jusqu'à obtention d'un gel aqueux formable comportant des inclusions d'air formées à partir des grains.

2. Procédé selon la revendication 1, caractérisé en ce que le monomère est de l'acide acrylique à une concentration dans la solution de l'ordre de 15% à 30%.

3. Procédé selon la revendication 2, caractérisé en ce que le comonomère est du N-N′ méthylbisacrylamide à une concentration dans la solution de l'ordre de 0,1% à 1%.

4. Procédé selon l'une des revendications 1 à 3, caractérisé en ce qu'un amorceur est ajouté à la solution aqueuse de monomère et de comonomère pour faciliter l'obtention du gel dans la phase de réticulation.

5. Procédé selon la revendication 4, caractérisé en ce que l'amorceur est du persulfate de potassium ou d'ammonium à une concentration dans la solution comprise entre 0 et 0,1%.

6. Procédé selon la revendication 1, caractérisé en ce que la concentration de la poudre dans la solution est comprise entre 2 et 4%.

7. Procédé selon la revendication 1, caractérisé en ce que la poudre dispersée dans la solution est formée de l'un des produits suivants, polymérisé : acide polyacrylique partiellement neutralisé, carboxycellulose, polystyrène sulfoné.

8. Procédé selon la revendication 4, caractérisé en ce que le matériau est formé, pour 80g d'eau, à partir de 20g d'acide acrylique, monomère, 0,2g de N-N′ méthylbisacrylamide, comonomère, 0,66g de persulfate d'ammonium ou de potassium, amorceur, et 3g de poudre de polymère réticulé.

9. Procédé selon la revendication 8, caractérisé en ce que la réticulation de la solution est effectuée à 70° C pendant 2 heures.

10. Application du procédé selon l'une des revendications précédentes à la réalisation d'écrans acoustiques à immerger, caractérisée en ce que le gel aqueux est moulé à la forme souhaitée pour l'écran (10), puis enfermé dans un boîtier (11) susceptible d'être fixé sur une structure support (12).

FIG_1

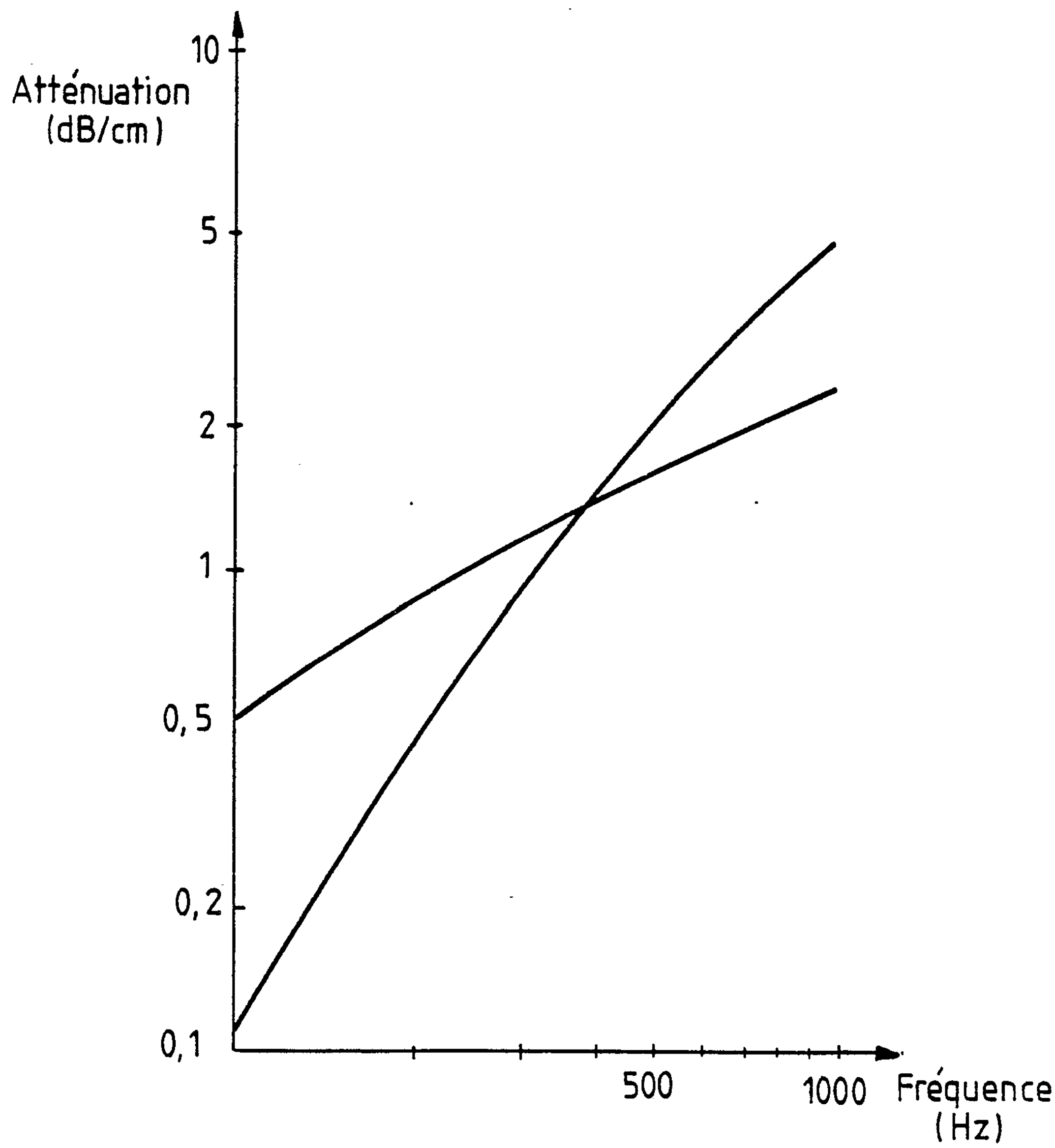

FIG_2

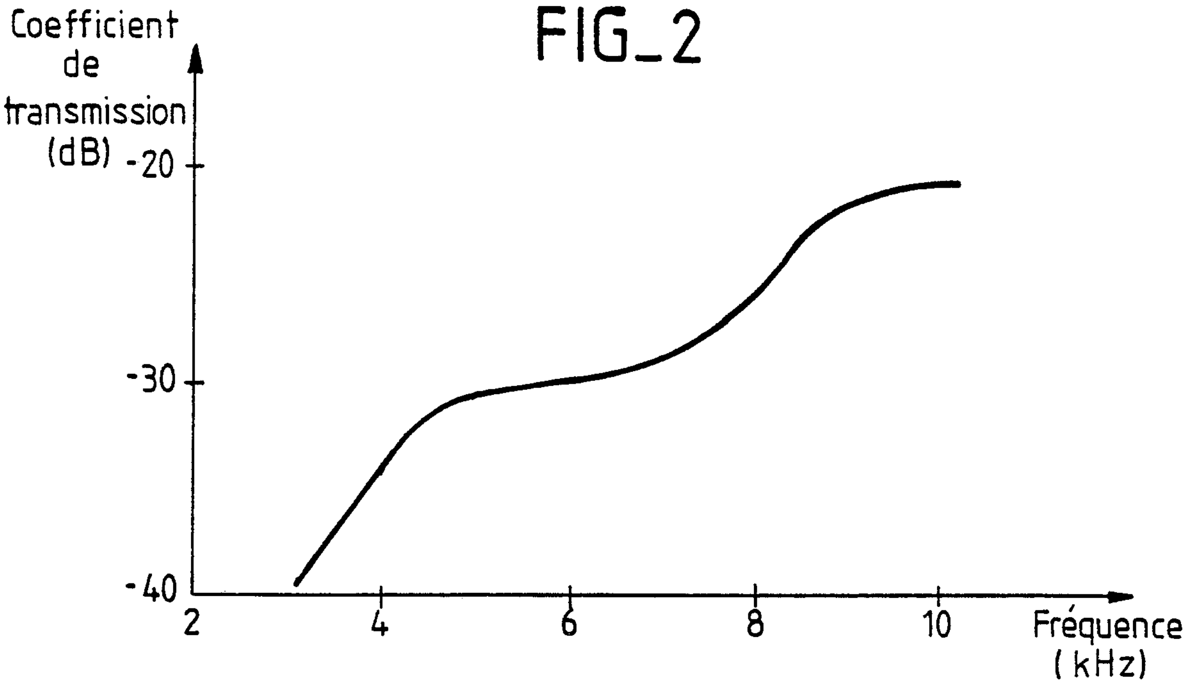


FIG_3

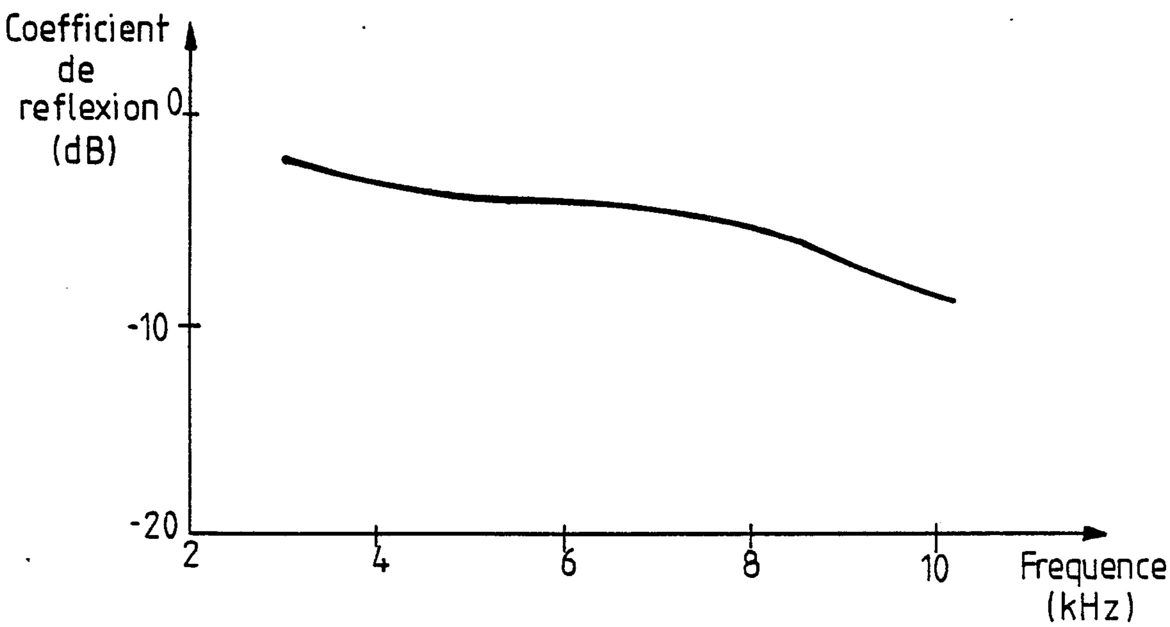


FIG_4

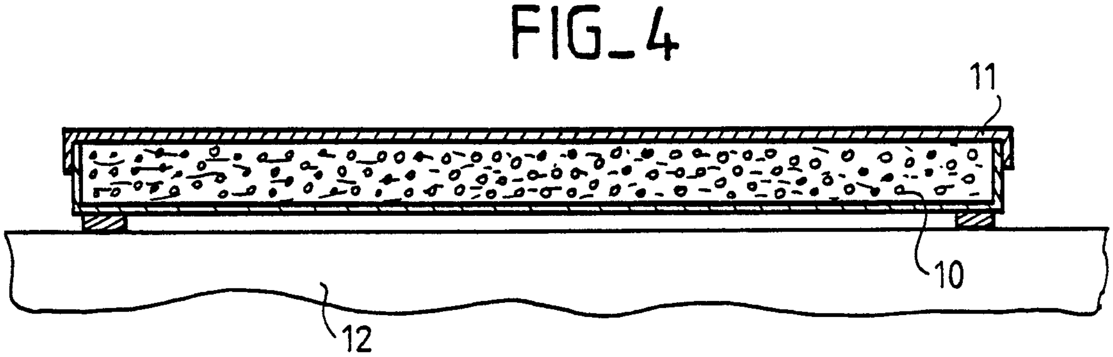

Office européen des brevets

# RAPPORT DE RECHERCHE EUROPEENNE

Numero de la demande

EP 90 40 0322

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 022 633 (ROHM & HAAS) | | C 08 J 3/00<br>C 08 F 291/00 |
| A | EP-A-0 073 529 (ROHM & HAAS) | | |
| | | | **DOMAINES TECHNIQUES RECHERCHES (Int. Cl.5)** |
| | | | C 08 J<br>C 08 F |

Le présent rapport a été établi pour toutes les revendications

| Lieu de la recherche | Date d'achèvement de la recherche | Examinateur |
|---|---|---|
| LA HAYE | 11-04-1990 | MEULEMANS R.A.M.G.G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)